(19) **Europäisches Patentamt / European Patent Office / Office européen des brevets**

(11) **EP 1 643 686 B1**

(12) **EUROPEAN PATENT SPECIFICATION**

(45) Date of publication and mention
of the grant of the patent:
**11.11.2009 Bulletin 2009/46**

(51) Int Cl.:
***H04L 12/28*** (2006.01)

(21) Application number: **05021425.3**

(22) Date of filing: **30.09.2005**

(54) **Detecting interference between neighbouring basic service sets in a wireless local area network**

Interferenzdetektion zwischen Nachbargrunddienstesätzen in einem drahtlosen lokalen Netzwerk

Détection d'interférence entre des ensembles de services de base voisins dans un réseau local sans fil

(84) Designated Contracting States:
**FR GB IT**

(30) Priority: **30.09.2004 KR 2004078022**

(43) Date of publication of application:
**05.04.2006 Bulletin 2006/14**

(73) Proprietor: **Samsung Electronics Co., Ltd.**
**Suwon-si, Gyeonggi-do (KR)**

(72) Inventors:
• **Song, Hak-Hoon**
**Gangseo-gu,**
**Seoul (KR)**

• **Yi, Sang-Kug**
**Bundang-gu,**
**Seongnam-si,**
**Gyeonggi-do (KR)**

(74) Representative: **Lang, Johannes**
**Bardehle, Pagenberg, Dost, Altenburg, Geissler**
**Postfach 86 06 20**
**81633 München (DE)**

(56) References cited:
**US-A1- 2003 040 319       US-A1- 2004 116 112**

• **CERVELLO G ET AL: "Dynamic Channel SDelection (DCS) Scheme for 802.11" IEEE 802.11-00/195, XX, XX, 12 July 2000 (2000-07-12), pages 1-7, XP002213585**

**Description**

BACKGROUND OF THE INVENTION

Field of the Invention

The present invention relates to detecting interference between neighboring basic service sets (BSSs) in a Wireless Local Area Network System (WLAN) and, more particularly, to detecting interference caused by neighboring BSSs using the same channel.

Description of the Related Art

In general, an IEEE 802.11 based WLAN system accesses a medium based on a Carrier Sense Multiple Access/Collision Avoidance (CSMA/CA) scheme, wherein Access Points (APs) operate independently from each other. That is, in the WLAN system, a separate device does not assign a channel but each AP selects the channel independently by means of an operator or a channel assignment algorithm when the AP is turned ON. Accordingly, there is a great likelihood that channels used by respective BSSs are duplicated when a number of WLAN systems exist. The duplicated channels cause interference between neighboring BSSs.

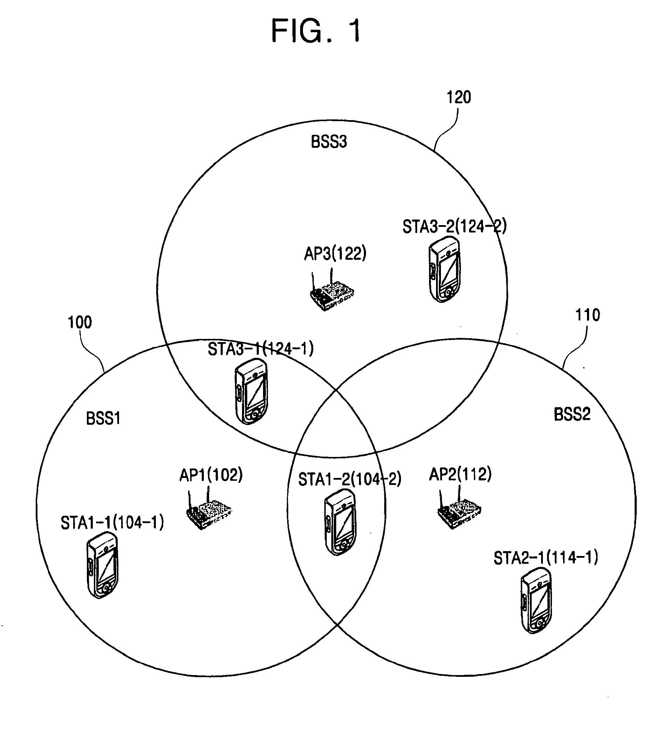

FIG. 1 illustrates three neighboring BSSs and stations receiving a WLAN service within each of the BSSs in a WLAN system.

In a WLAN system, three neighboring BSSs and stations receiving a WLAN service within each of the BSSs.

STA1-2 is positioned in both BSS1 and BSS2, and STA3-1 is positioned in both BSS1 and BSS3.

Hereinafter, the influence of interference will be discussed by way of example in conjunction with the STA1-2. The STA1-2 is a station in communication with AP1 within the BSS1. Assume that the BSS1 and the BSS2 are assigned the same channel and the BSS3 120 is assigned a different channel.

First, a case will be discussed in which the STA1-2 receives a frame.

An AP 1 and an AP2 cannot recognize each other due to features of the WLAN system, and thus independently occupy a medium. It allows the STA1-2 to receive all frames in the BSS1 and the BSS2. 'Receive' herein is defined as reception allowing frame information analysis rather than reception of only signals. Thus, if the frames are received from the two APs and, they can collide with each other, causing an error.

Generally, the STA1-2 discards frames with an error. The AP does not receive ACK to the discarded frame and thus the AP retransmits the relevant frame in a certain period of time. At this time, successful reception of the re-transmitted frame can not be assured. The frame error (or packet error) can continue to occur because the BSSs cannot recognize the presence of interference therebetween.

Next, a case where the STA1-2 transmits a frame will be described.

When the STA1-2 transmits the frame, both the AP1 and the AP2 will receive the frame. This is because the AP1 and the AP2 use the same channel. The STA1-2 is a station in communication with the AP1, which means that the AP2 will receive an unnecessary frame from the AP2.

In this case, because the STA1-2 occupies the medium, there can be no chance that the AP2 transmits frames to the STA2-1 that is a station in the BSS2. Furthermore, the frame transmitted from the STA2-1 to the AP2 can collide with the frame transmitted from the STA1-2 to the AP2. This collision prevents the AP2 from receiving a frame of the STA2-1, which is a frame that the AP2 should receive. The collision caused by the use of the same channel is particularly problematic when the frame transmission is repeated during a short time period or when the frame contains a large amount of data.

Meanwhile, although STA3-1 belongs to two neighboring BSSs, i.e., the BSS1 and the BSS3, it is not affected by the above-stated interference. This is because the BSS1 and the BSS3 use different channels. That is, when the two BSSs are neighboring each other, a stable communication environment can be established when the respective BSSs use different channels. Accordingly, there is a need for an interference detecting apparatus and method capable of establishing a stable communication environment and assuring Quality of Service (QoS).

An example of the prior state of the art is given by document US 2003/040319.

SUMMARY OF THE INVENTION

It is, therefore, an object of the present invention to provide an apparatus and method to detect interference between neighboring BSSs caused by the neighboring BSSs using the same channel in a WLAN system.

It is another object of the present invention to provide an apparatus and method to detect interference between neighboring BSSs caused by the neighboring BSSs using the same channel and switching a channel upon the interference being detected in a WLAN system.

In accordance with one aspect of the present invention, an apparatus to detect interference between neighboring Basic Service Sets (BSSs) in a Wireless Local Area Network (WLAN) system in which an arbitrary Access Point (AP) wirelessly transmits and receives frames to and from a station in a relevant BSS is provided, the apparatus comprising: an other-BSSID rate calculator adapted to calculate a rate of frames containing an IDentifier (ID) of the relevant BSS and other BSSID (BSS IDentifier) among all of the received frames; and an interference detector adapted to determine whether interference between the BSSs has occurred, based on the other-BSSID rate calculated by the other-BSSID rate calculator.

The other-BSSID rate calculator is preferably adapted to calculate the other-BSSID rate in accordance with the following equation:

$$R_{OBSS} = w_0 Num(n) + w_1 Num(n+1) + \; + w_{L-1} Num(n+L-1),$$

wherein, Num (n) is the number of other BSSIDs measured at each time interval, $R_{OBSS}$ is the other-BSSID rate, and w is a weight of each time interval.

The apparatus preferably further comprises a storage area adapted to store the calculated other-BSSID rate.

The interference detector is preferably adapted to determine that interference has occurred in response to the other-BSSID rate being more than a predetermined threshold value.

The BSSID preferably comprises an identifier indicating a BSS in which an arbitrary station is being currently serviced.

The BSSID preferably comprises a Medium Access Control (MAC) address of the AP.

The apparatus preferably further comprises a channel switch adapted to receive a signal notifying an occurrence of interference and to switch a channel assigned for frame transmission and reception in response to the interference detector determining that interference has occurred and to output the signal notifying the occurrence of interference.

The apparatus preferably further comprises an error rate calculator adapted to measure an error rate caused in receipt of the frame.

The error rate calculator is preferably adapted to calculate the error rate in accordance with the following equation:

$$R_{ERR} = w_0 Err(n) + w_1 Err(n+1) + \; + w_{L-1} Err(n+L-1),$$

wherein, Err(n) is the number of errors measured during each time interval, Err(n) is the most recently created error, Err (n+L-1) is the oldest created error, and w is a weight of each time interval.

The interference detector is preferably adapted to determine that interference has occurred in response to the other-BSSID rate being more than a first predetermined threshold value, upon the error rate being less than a predetermined threshold value, and the interference detector is adapted to determine that interference has occurred in response to the other-BSSID rate being more than a second threshold value smaller than the first threshold value, upon the error rate being more than the predetermined threshold value.

The apparatus preferably further comprises a storage area adapted to store the calculated error rate.

The apparatus preferably further comprises a frame identifier adapted to determine whether the received frame is a frame allowing interference detection.

The frame identifier is preferably adapted to determine that a frame containing the BSSID is the frame allowing the interference detection.

The frame containing the BSSID preferably comprises at least one of a management frame and a data frame.

In accordance with another aspect of the present invention, an apparatus adapted to detect interference in an Access Point (AP) wirelessly transmitting and receiving frames to and from a station in a Basic Service Set (BSS) in a Wireless Local Area Network (LAN) system conforming to an IEEE 802.11 standard is provided, the apparatus comprising: an other-BSSID rate calculator adapted to calculate a rate of frames containing an other-BSSID (BSS IDentifier) among all of the received frames; an interference detector adapted to determine whether interference between the BSSs has occurred, based on the other-BSSID rate calculated by the other-BSSID rate calculator; and a channel switch adapted to switch a channel assigned for frame transmission and reception in response to the interference detector determining that interference has occurred.

In accordance with still another aspect of the present invention, an apparatus adapted to detect interference in a station wirelessly transmitting and receiving frames to and from an Access Point (AP) in a Basic Service Set (BSS) of a Wireless Local Area Network (LAN) system conforming to an IEEE 802.11 standard is provided, the apparatus comprising: an other-BSSID rate calculator adapted to calculate a rate of frames containing an other-BSSID (BSS IDentifier) among all of the received frames; an interference detector adapted to determine whether interference between the BSSs has occurred, based on the other-BSSID rate calculated by the other-BSSID rate calculator; and a channel switch adapted to transmit a signal to the AP to request channel switching in response to the interference detector determining that interference has occurred.

In accordance with yet another aspect of the present invention, a method of detecting interference between neighboring Basic Service Sets (BSSs) in a Wireless Local Area Network (WLAN) system conforming to an IEEE 802.11 standard in which an arbitrary Access Point (AP) wirelessly transmits and receives frames to and from a station in a relevant BSS is provided, the method comprising: receiving the frames; calculating an other-BSSID rate for the received frames; and determining whether interference has occurred, based on the other-BSSID rate.

The other-BSSID rate is preferably calculated in accordance with the following equation:

$$R_{OBSS} = w_0 Num(n) + w_1 Num(n+1) + \ +w_{L-1} Num(n+L-1),$$

wherein, Num (n) is the number of other BSSIDs measured at each time interval, $R_{OBSS}$ is the other-BSSID rate, and w is a weight of each time interval.

The method preferably further comprises switching an assigned channel for frame transmission and reception in response to a determination that interference has occurred.

## BRIEF DESCRIPTION OF THE DRAWINGS

A more complete appreciation of the present invention, and many of the attendant advantages thereof, will be readily apparent as the present invention becomes better understood by reference to the following detailed description when considered in conjunction with the accompanying drawings in which like reference symbols indicate the same or similar components, wherein:

FIG. 1 is a view of three neighboring BSSs and stations receiving a WLAN service in each of the BSSs in a WLAN system;

FIG. 2 is a block diagram of the configuration of an apparatus to detect interference caused by the neighboring BSSs using the same channel according to an embodiment of the present invention;

FIG. 3 is a view of the structure of a media access control (MAC) frame for use in a WLAN system;

FIG. 4 is a view of the structure of a header of the MAC frame shown in FIG. 3;

FIG. 5 is a view of the content of an address field of the MAC frame shown in FIGS. 3 and 4;

FIG. 6 is a flowchart of a process of detecting interference caused by the neighboring BSSs using the same channel according to an embodiment of the present invention;

FIG. 7 is a flowchart of an interference detection method using other-BSSID rate, an error rate, and reception power of other BSS frames as determination criteria to detect interference according to an embodiment of the present invention; and

FIG. 8 is a view of a storage format of information for use in interference detection according to the present invention.

## DETAILED DESCRIPTION OF THE INVENTION

FIG. 1 illustrates three neighboring BSSs and stations receiving a WLAN service within each of the BSSs in a WLAN system.

In FIG. 1, STA1-2 104-2 is positioned in both BSS1 100 and BSS2 110, and STA3-1 124-1 is positioned in both BSS1 100 and BSS3 120.

Hereinafter, the influence of interference will be discussed by way of example in conjunction with the STA1-2 104-2. The STA1-2 104-2 is a station in communication with AP1 102 within the BSS1 100. Assume that the BSS1 100 and the BSS2 110 are assigned the same channel and the BSS3 120 is assigned a different channel.

First, a case will be discussed in which the STA1-2 104-2 receives a frame.

An AP1 102 and an AP2 112 cannot recognize each other due to features of the WLAN system, and thus independently occupy a medium. It allows the STA1-2 104-2 to receive all frames in the BSS1 100 and the BSS2 110. 'Receive' herein is defined as reception allowing frame information analysis rather than reception of only signals. Thus, if the frames are received from the two APs 102 and 112, they can collide with each other, causing an error.

Generally, the STA1-2 104-2 discards frames with an error. The AP does not receive ACK to the discarded frame and thus the AP retransmits the relevant frame in a certain period of time. At this time, successful reception of the re-transmitted frame can not be assured. The frame error (or packet error) can continue to occur because the BSSs cannot recognize the presence of interference therebetween.

Next, a case where the STA1-2 104-2 transmits a frame will be described.

When the STA1-2 104-2 transmits the frame, both the AP1 102 and the AP2 112 will receive the frame. This is because the AP1 102 and the AP2 112 use the same channel. The STA1-2 104-2 is a station in communication with the AP1 102, which means that the AP2 112 will receive an unnecessary frame from the AP2.

In this case, because the STA1-2 104-2 occupies the medium, there can be no chance that the AP2 112 transmits frames to the STA2-1 114-1 that is a station in the BSS2 110. Furthermore, the frame transmitted from the STA2-1 114-1 to the AP2 112 can collide with the frame transmitted from the STA1-2 104-2 to the AP2 112. This collision prevents the AP2 112 from receiving a frame of the STA2-1 114-1, which is a frame that the AP2 112 should receive. The collision caused by the use of the same channel is particularly problematic when the frame transmission is repeated during a short time period or when the frame contains a large amount of data.

Meanwhile, although STA3-1 124-1 of FIG. 1 belongs to two neighboring BSSs, i.e., the BSS1 100 and the BSS3 120, it is not affected by the above-stated interference. This is because the BSS1 100 and the BSS3 120 use different channels. That is, when the two BSSs are neighboring each other, a stable communication environment can be established when the respective BSSs use different channels. Accordingly, there is a need for an interference detecting apparatus and method capable of establishing a stable communication environment and assuring Quality of Service (QoS).

The present invention will now be described more fully hereinafter with reference to the accompanying drawings, in which exemplary embodiments of the present invention are shown. The present invention can, however, be embodied in different forms and should not be construed as being limited to the embodiments set forth herein. Rather, these embodiments are provided so that this disclosure will be thorough and complete, and will fully convey the scope of the invention to those skilled in the art. Like numbers refer to like elements throughout the specification.

The present invention described below is directed to an apparatus and method to detect interference between BSSs in a WLAN system conforming to the IEEE 802.11 standard. In particular, it can be implemented on a Medium Access Control (MAC) layer.

The present invention determines whether interference caused by the neighboring BSSs using the same channel occurs, based on a BSSID included in a MAC frame. The BSSID is an identifier for discriminating between respective BSSs. Generally, a MAC address value of an Access Point (AP) in each of the BSSs is used as the BSSID.

In the WLAN system, each station and an AP obtain various information from a MAC header 300 of a received frame when the received frame arrives at a MAC layer. Each station and the AP analyzes the received frame according to a defined procedure and places a body of the frame on Logical Link Control (LLC) when a destination address in the frame matches its own address and it is determined that the frame has no error, based on FCS. At this time, each station and the AP determines that interference exists when receiving a frame containing other BSSID in the address information. This is based on that different BSSs have different BSSIDs, which are the MAC addresses of the AP.

The interference detecting apparatus and method of the present invention described below determine whether the received frame contains the other BSSID to detect the occurrence of interference.

Hereinafter, the interference detecting apparatus according to the present invention will be described with reference to the embodiments shown in the accompanying drawings.

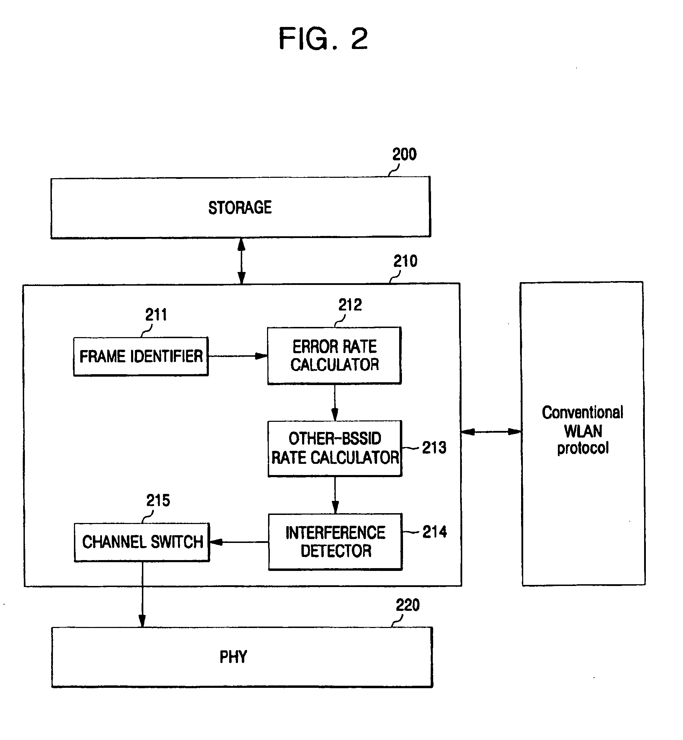

FIG. 2 is a block diagram of the configuration of an apparatus to detect interference caused by neighboring BSSs using the same channel according to an embodiment of the present invention.

The interference detecting apparatus according to the present invention can include another-BSSID rate calculator 213 to determine whether frames containing other BSSID have been received and to calculate a rate at which the frames containing the other BSSID have been received, and an interference detector 214 to determine whether interference occurs due to use of the same channel, based on the data calculated by the another-BSSID rate calculator 213.

The another-BSSID rate calculator 213 checks the BSSID contained in the received frames to determine whether the received frames are frames that cause interference, i.e., frames that are being received from two or more BSSs. The another-BSSID rate calculator 213 can calculate the another-BSSID rate using the following Equation 1.

**\<Equation 1\>**

$$R_{OBSS} = w_0 Num(n) + w_1 Num(n+1) + \cdots + w_{L-1} Num(n+L-1)$$

wherein, Num (n) is the number of the another BSSIDs measured at each time interval, ROBSS is another-BSSID rate, and w is a weight of each time interval.

The weight is used to differentiate a reflection rate with respect to time. A different value of the weight can be given to each of the another-BSSID values detected on a given time basis. The weight can be assigned in proportion to the importance of the received another BSSID. For example, a more recently detected BSSID can be assigned a greater weight for its more importance. Equation 2 represents a relationship among the weights.

**\<Equation 2\>**

$$w_0 + w_1 + w_2 + \cdots + w_{L-1} = 1$$

$$w_0 \ni w_1 \ni w_2 \ni \cdots \ni w_{L-1}$$

The another-BSSID rate calculator 213 outputs the calculated another-BSSID rate to the interference detector 214.

The interference detector 214 determines whether interference has occurred, based on the another-BSSID rate input from the another-BSSID rate calculator 213. Generally, the interference detector 214 determines that interference has occurred when the calculated another-BSSID rate is larger than a predetermined threshold value. When it has been determined that interference has occurred, the interference detector 214 generates and outputs a signal indicating that interference has occurred.

When it has been determined whether interference has occurred, the interference detector 214 considers both the another-BSSID rate and a frame or packet error rate encountered during frame transfer. This is because the error can be caused by frame collision on air due to interference by signals coming from the other BSSs. In order to use the error rate to detect the interference, the interference detecting apparatus according to the present invention further includes an error rate calculator 212 to measure an error rate caused during frame transfer.

The error rate calculator 212 calculates the error rate when a received frame has an error. The error rate is the number of errors per unit time. When the error rate is greater than a predetermined threshold value, it is assumed that a communication channel is in a poor state or there is an object that causes interference.

The error rate can be calculated using weights, similarly to the another-BSSID rate. The error rate RERR calculated using the weights is shown in Equation 3.

**\<Equation 3\>**

$$R_{ERR} = w_0 Err(n) + w_1 Err(n+1) + \cdots + w_{L-1} Err(n+L-1).$$

wherein, Err(n) is the number of errors measured during each time interval. Err(n) is the most recently created error and Err(n+L-1) is the oldest created error. According to the present invention, the calculated error rate can be used to detect interference in conjunction with the other-BSSID rate.

The interference detector 214 determines whether interference has occurred based on the error rate received from the error rate calculator 212 and the another-BSSID rate received from the another-BSSID rate calculator 213. The interference detector 214 determines that interference has occurred when the error rate is greater than a threshold value, even though the measured another-BSSID rate is small.

In the present invention, the interference detection based on the another-BSSID rate can be performed only on frames having no error. The another-BSSID rate calculator 213 determines whether the another BSSID has been received, only with respect to the frames having no error. The interference detector 214 determines whether interference has occurred, based on the another-BSSID rate input from the another-BSSID rate calculator 213.

Furthermore, according to the present invention, the interference detecting apparatus uses reception power (RSSI) of the received frame to determine whether the interference has occurred. The interference detector 214 determines that the interference is high when the reception power of the another BSS frame received by the station is high, even though both the another-BSSID rate and the error rate are small. The high reception power of the another BSS frame is because two BSSs are in close proximity to each other. In this case, interference can occur any time.

The interference detecting apparatus according to the present invention preferably further includes a frame identifier 211 to determine whether a received frame is suitable for interference detection. A description of the MAC frame of the WLAN follows prior to discussing the frame identifier 211.

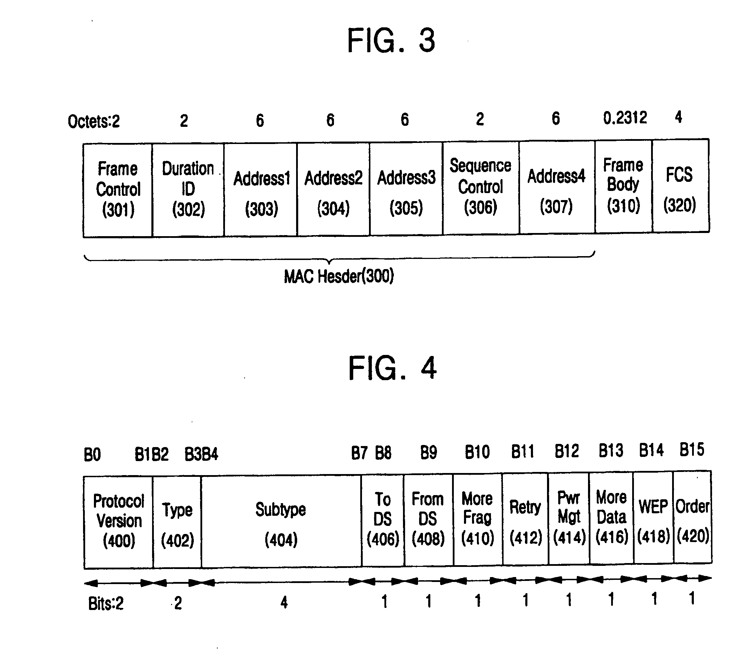

FIG. 3 is a view of the structure of an IEEE 802.11 based MAC frame.

A MAC frame, as shown in FIG. 3, includes a header 300, a frame body 310, and a Frame Check Sequence (FCS) 320. The header 300 contains various information for maintaining a MAC protocol. The frame body 310 contains information to be sent from or to LLC. The frame body 310 is equal to a MAC Service Data Unit (MSDU) or an LLC Protocol Data Unit (LPDU). The FCS 320 determines whether an error has occurred after a frame transmission through a medium. A two-bit Cyclic Redundancy Code (CRC) can be used for the FCS.

The header 300 can contain a frame control field 301, a duration/ID field 302, address fields 303, 304, 305 and 307, and a sequence control field 306.

The frame control field 301 contains control information transmitted between stations. The duration/ID field 302 contains a duration value that is dependent on a transmitted frame. The address fields 303, 304, 305 and 307 have several forms, such as a BSSID, a Source Address (SA), a Destination Address (DA), a Transmitter Address (TA), and a Receiver Address (RA), according to the type of frame being transmitted. The DA is a final DA of the frame, the SA is an address from which frame transmission starts, the RA is an address of an AP which receives a subsequent frame, and the TA is an address of an AP which transmits a previous frame.

The sequence control field 306 contains a sequence number for transmission of successive frames.

FIG. 4 is a view of the structure of a frame control field in a header of the MAC frame.

The frame control field 301 can include a protocol version field 400, a type field 402, a subtype field 404, a To DS field 406, a From DS field 408, a More Fragment (More Frag) field 410, a retry field 412, a Power Management (Pwr Mgt) field 414, a more data field 416, a WEP field 418, and an order field 420.

The protocol version field 400 is provided for future protocol versions and is generally set to '0' as a current value. The type field 402 and the subtype field 404 contain information indicating the type of a relevant MAC frame. In particular, the type field 402 indicates whether which of management, control, and data frames corresponds to a relevant frame. The subtype field 404 indicates a use of the relevant frame.

The To DS field 406 and the From DS field 408 respectively contain rough information as to a source and a destination of the relevant MAC frame. The To DS field 406 can be set to '1' when the frame destination is a BSS wireless cell in another AP, i.e., a distribution system. The From DS field 408 can be set to '1' when a frame is received from another AP via the distribution system.

The fragment field 410 can be set to '1' when the same frame contains successive fragments. The retry field 412 can be set to '1' when the relevant frame is a re-transmitted frame for a previous frame.

The Pwr Mgt field 414 is used to save power. The more data field 416 is used when a frame is transmitted to a station in a power save mode. When having more frames to be transmitted to the station in the power save mode, a transmitting station sets the more data field 416 to '1' to transmit the frames. A receiving station determines that it will receive more frames when receiving frames containing the more data field 416 set to '1'.

The WEP field 418 is used for encryption. The WEP generates an encryption key for a secret share so that the transmitting side and the receiving side modify a frame bit to prevent bugging. Generally, the WEP can be used optionally.

The order field 420 indicates that data is being transmitted using a StrictlyOrdered service class. At this time, the receiving side should handle the frames in sequence.

The set values of the respective fields of the above-described MAC frame conform to the IEEE 802.11 standard.

The address fields 303, 304, 305 and 307 use MAC addresses of the transmitting and receiving stations. The sequence of the addresses is determined depending on the type of MAC frame. The MAC frame can be classified into a management frame, a control frame, and a data frame according to its use. The management frame is used to establish initial communication between the stations and the AP. The management frame is used to provide services such as association and authentication. The control frame assists in transmitting data frames when the association and authentication processes using the management frame are completed. The data frame is used to transmit information from the source station to the destination station.

The sequence of the addresses varies depending on whether each frame comes from a distribution system or goes to the distribution system. The address sequence of the frame will be discussed with reference to the accompanying drawings.

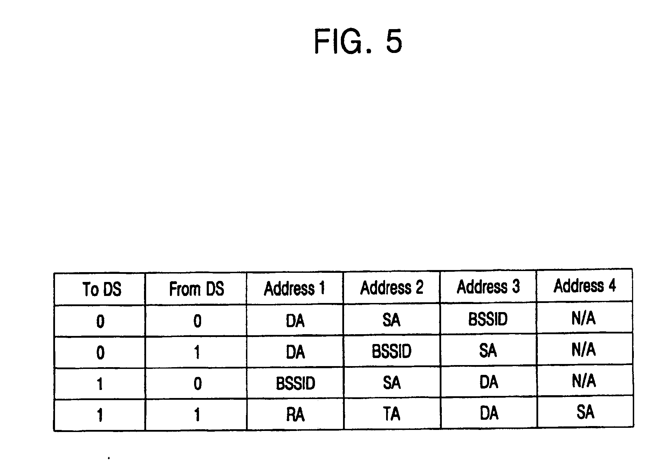

FIG. 5 is a view of address values of a frame.

As shown in FIG. 5, for the management frame or the control frame, ToDA = 0 and FromDS = 1 when To DS = From DS = 0 and the AP transmits a data frame. ToDA = 1 and FromDS = 0 when the station transmits the data frame to the AP.

As described above, the BSSID is used to detect interference according to the present invention. Therefore, a frame containing the BSSID is useful for interference detection according to the present invention. Frames using the BSSID as an address field include a data frame and a management frame. It is desirable to determine the presence of interference using the management frame or the data frame rather than the control frame because the control frame is used only for some cases. The type of each frame can be determined based on the type field 402 of FIG. 4.

The frame identifier 211 determines whether the received frame is a frame containing the BSSID. The frame identifier 211 allows the received frame to be used as information for determining the occurrence of interference or a degree of the interference, when the received frame is a data frame or a management frame containing the BSSID.

According to the present invention, the interference detecting apparatus can further include a channel switch 215 for switching a channel assigned to a relevant AP when it has been determined that interference has occurred. The channel switch 215 selects another channel in place of the currently assigned channel when receiving a signal indicating the occurrence of interference from the interference detector 214.

According to the above-described embodiments, the interference detecting apparatus can be included in a MAC layer of the AP and the stations.

Furthermore, according to the present invention, the interference detecting apparatus can further include a storage 200 to store the error rate calculated by the error rate calculator 212 and the another-BSSID data calculated by the another-BSSID rate calculator 213, which can be used to detect interference.

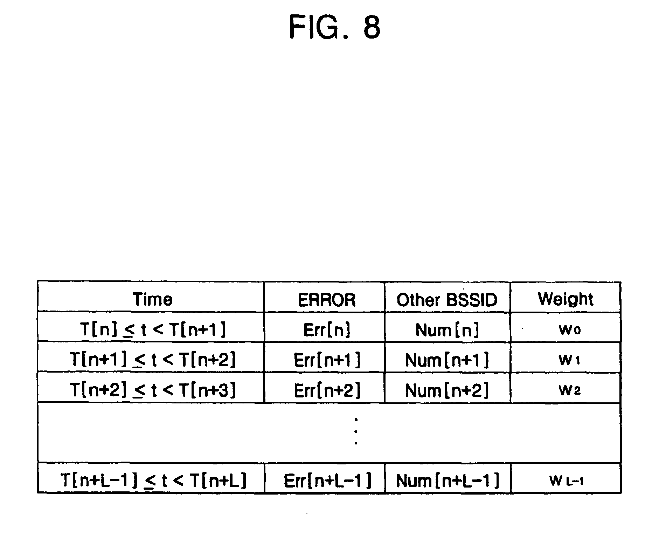

FIG. 8 is a view of a storage format of the storage 200.

FIG. 8 is a table representing the number of errors detected during a certain time interval, which is used to calculate an error rate.

According to the present invention, the interference detecting apparatus can further include a physical (PHY) layer 220 for frame transmission and reception. Actual channel switching can be made on the physical layer when interference occurs. For example, when the channel switch 215 outputs a signal to request channel switching, the physical layer 220 can receive the signal and change a channel frequency by controlling an oscillator or a Phase Locked Loop (PLL). These interference detecting and channel switching processes according to the present invention are added to the existing WLAN protocol and are compatible with the IEEE 802.11 standard.

According to the present invention, the interference detecting apparatus can be included in the AP or the station. That is, according to the present invention, the interference detection can be made by the AP or the station.

The AP and the station can perform different channel switching processes when it has been determined that interference has occurred. This is because the AP assigns the channel. That is, the AP can immediately switch the assigned channel to assign a new channel when detecting interference while the station does not have a means for switching the channel when detecting interference. Accordingly, the station performs channel switching by transmitting a signal to the AP to request the channel switching when detecting interference. The AP can perform the channel switching when receiving the signal to request the channel switching from the station as well as when detecting interference by itself.

The interference detecting method according to the present invention described below corresponds to the foregoing interference detecting apparatus.

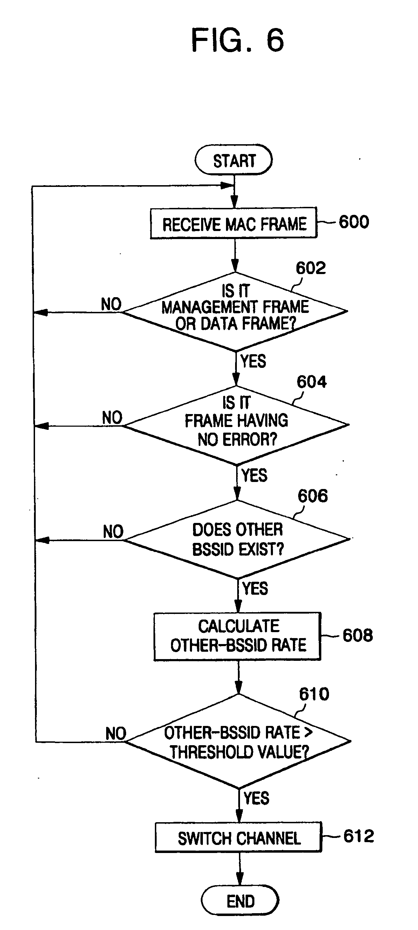

FIG. 6 is a flowchart of a process of detecting interference caused by neighboring BSSs using the same channel according to an embodiment of the present invention.

In Step 600 of FIG. 6, a station receives a frame from an AP. In Step 602, the station determines whether the received frame is a frame containing BSSID. That is, the station determines whether the received frame is a management frame or a data frame. This determination is made by referring to the type field 402 of the frame. If the received frame is a data frame or management frame, then the received frame is a frame having the BSSID and thus is used as a material on which it is based in determining the occurrence of interference or a degree of interference. Otherwise, a general WLAN protocol is kept.

In Step 604, the station calculates an error rate when the received data or management frame has an error. The station can determine that a communication channel is in a poor state or there is an object that causes interference when the error rate becomes larger than a predetermined threshold value.

In Step 606, upon receiving a frame having no error, the station checks a BSSID contained in the relevant frame to determine whether the relevant frame is a frame that causes interference.

If the checked BSSID is a BSSID other than an ID of the relevant BSS, i.e, if it is another BSSID, the station calculates another-BSSID rate in Step 608. In Step 610, the station determines whether interference has occurred, based on the another-BSSID rate calculated in Step 608. The station determines that interference has occurred if the calculated another-BSSID rate is larger than a predetermined threshold value.

In Step 612, when it has been determined that interference has occurred, the station switches the channel to another channel. The channel switching at the station side can be effected by transmitting a signal to the AP to request the channel switching.

The station determines that the interference is significant when the error rate is larger than the threshold value, even though the measured another-BSSID rate is small.

Alternatively, the station determines that the interference is significant when the reception power of the another BSS frame received by the station is high, even though both the another-BSSID rate and the error rate are small.

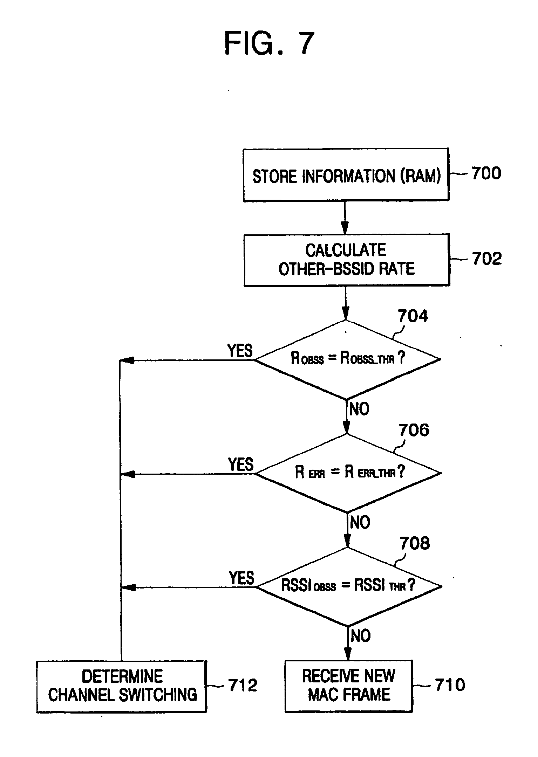

The interference detecting process according to the embodiment is shown in FIG. 7, wherein the another-BSSID rate, the error rate, and the reception power of the another BSS frame are all used as determination criteria for interference detection.

An operator can select whether to use only the another-BSSID rate, both the another-BSSID rate and the error rate, or all of the another-BSSID rate, the error rate, and the reception power of the another BSS frame interference, as the determination criteria for the interference detection.

Although the foregoing description on the process of the interference detection method according to the present invention is made by way of example in conjunction with the operation of the station side, the AP can perform the interference detection through the same process.

It is possible to detect interference between neighboring BSSs that can be caused in the WLAN system, by applying the present invention. The present invention can be useful, in particular, in a high-density resident environment or an office environment. According to the present invention, when interference is detected, proper channel switching is attempted to enable load balance even in a system having no central controller. It results in the improved QoS.

According to the present invention, it is possible to detect the interference without communication interruption by performing the detection without setting separate detection intervals. The present invention can be applied to both the AP and the station and can be implemented in software. The present invention uses the existing IEEE 802.11 MAC protocol as is and includes an additional detection system therein, thus being comparable with the IEEE 802.11.

**Claims**

1. An apparatus to detect interference between neighboring Basic Service Sets BSS (100, 110, 120) in a Wireless Local Area Network WLAN system in which an arbitrary Access Point AP (102, 112, 122 wirelessly transmits and receives frames to and from a station (104-2) in a relevant BSS, and in which channel interference is detected, the apparatus being **characterized in that** it comprises,

   an other-BSSID rate calculator (213) adapted to calculate a rate of frames containing an IDentifier ID (303) of the relevant BSS and other BSSID BSS IDentifier among all of the received frames, wherein the other-BSSID rate calculator (213) is adapted to calculate the other-BSSID rate in accordance with the following equation

$$R_{OBSS}=w_0\mathrm{Num}(n)+w_1\mathrm{Num}(n+1)+\cdots+w_{L-1}\mathrm{Num}(n+L-1),$$

   wherein, Num (n) is the number of other BSSIDs measured at each time interval, $R_{OBSS}$ is the other-BSSID rate, and w is a weight of each time interval;
   an error rate calculator (212) adapted to measure an error rate caused in receipt of the frame, wherein the error rate calculator is adapted to calculate the error rate in accordance with the following equation

$$R_{ERR}=w_0\mathrm{Err}(n)+w_1\mathrm{Err}(n+1)+\cdots+w_{L-1}\mathrm{Err}(n+L-1),$$

   wherein, Err(n) is the number of errors measured during each time interval, Err(n) is the most recently created error, Err(n+L-1) is the oldest created error, and w is a weight of each time interval; and
   an interference detector (214) adapted to determine whether interference between the BSSs has occurred, based on the other-BSSID rate calculated by the other-BSSID rate calculator.

2. The apparatus according to claim 1, further comprising a storage area (200) adapted to store the calculated other-BSSID rate.

3. The apparatus according to claim 1 or 2, wherein the interference detector (214) is adapted to determine that interference has occurred in response to the other-BSSID rate being more than a predetermined threshold value.

4. The apparatus according to claim 1, wherein the BSSID comprises an identifier (402) indicating a BSS in which an arbitrary station is being currently serviced.

5. The apparatus according to claim 4, wherein the BSSID comprises a Medium Access Control MAC address of the AP.

6. The apparatus according to claim 1, further comprising a channel switch (215) adapted to receive a signal notifying an occurrence of interference and to switch a channel assigned for frame transmission and reception in response to the interference detector (214) determining that interference has occurred and to output the signal notifying the occurrence of interference.

7. The apparatus according to claim 1,
wherein the interference detector (214) is adapted to determine that interference has occurred in response to the other-BSSID rate being more than a first predetermined threshold value, upon the error rate being less than a predetermined threshold value, and
wherein the interference detector (214) is adapted to determine that interference has occurred in response to the other-BSSID rate being more than a second threshold value smaller than the first threshold value, upon the error rate being more than the predetermined threshold value.

8. The apparatus according to claim 1, further comprising a storage area (200) adapted to store the calculated error rate.

9. The apparatus according to claim 1, further comprising a frame identifier (211) adapted to determine whether the received frame is a frame allowing interference detection.

10. The apparatus according to claim 9, wherein the frame identifier (211) is adapted to determine that a frame containing the BSSID is the frame allowing the interference detection.

11. The apparatus according to claim 10, wherein the frame containing the BSSID comprises at least one of a management frame and a data frame.

12. A method of detecting interference between neighboring Basic Service Sets BSS in a Wireless Local Area Network WLAN system conforming to an IEEE 802.11 standard in which an arbitrary Access Point AP wirelessly transmits and receives frames to and from a station in a relevant BSSs and in which channel interference is detected, the method being **characterized by** the steps:

   receiving the frames;
   calculating (702) an other-BSSID rate for the received frames in accordance with the following equation

$$R_{OBSS} = w_0 Num(n) + w_1 Num(n+1) + \cdots + w_{L-1} Num(n+L-1),$$

   wherein, Num (n) is the number of other-BSSIDs measured at each time interval, $R_{OBSS}$ is the other-BSSID rate, and w is a weight of each time interval;
   calculating (706) an error rate caused in receipt of the frame in accordance with the following equation

$$R_{ERR} = w_0 Err(n) + w_1 Err(n+1) + \cdots + w_{L-1} Err(n+L-1),$$

   wherein, Err(n) is the number of errors measured during each time interval, Err(n) is the most recently created error, Err(n+L-1) is the oldest created error, and w is a weight of each time interval; and
   determining (704) whether interference has occurred, based on the other-BSSID rate.

13. The method according to claim 12, further comprising switching (712) an assigned channel for frame transmission and reception in response to a determination that interference has occurred.

**Patentansprüche**

1. Einrichtung zum Feststellen von Störungen zwischen benachbarten Basis-Service-Sets BSS (100, 110, 120) in einem drahtlosen lokalen Netzwerk WLAN System, in dem ein beliebiger Zugangspunkt AP (102, 112, 122) drahtlos Datenübertragungsblöcke zu und von einer Station (104-2) in einem relevanten BSS überträgt und empfängt, und in dem Kanalstörungen festgestellt werden, wobei die Einrichtung **dadurch gekennzeichnet ist, dass** sie enthält:

   einen anderer-BSSID Raten-Berechner (213), der dazu eingerichtet ist, eine Rate von Datenübertragungsblök-ken zu berechnen, die einen IDentifizierer ID (303) des relevanten BSS und anderer-BSSID BSS IDentifizierer unter all den empfangenen Datenübertragungsblöcken enthalten, worin der anderer-BSSID Raten-Berechner (213) dazu eingerichtet ist, die anderer-BSSID Rate gemäß der folgenden Gleichung zu berechnen:

$$R_{OBSS} = w_o Num(n) + w_1 Num(n+1) + \ldots w_{L-1} Num(n+L-1),$$

   worin Num (n) die Anzahl der andere- BSSID's darstellt, gemessen in jedem Zeitintervall, $R_{OBSS}$ die anderer-BSSID Rate und w ein Gewicht jedes Zeitintervalls;
   einen Fehlerraten-Berechner (212), der dazu eingerichtet ist, eine Fehlerrate zu messen, die beim Empfang des Datenübertragungsblocks verursacht ist, worin der Fehlerraten-Berechner dazu eingerichtet ist, die Fehlerrate gemäß der folgenden Gleichung zu berechnen:

$$R_{ERR} = w_o Err(n) + w_1 Err(n+1) + \ldots w_{L-1} Err(n+L-1)$$

   worin Err(n) die Anzahl der Fehler darstellt, die während jedes Zeitintervalls gemessen werden, Err(n) den Fehler, der zeitlich am kürzesten zurückliegend erzeugt wurde, Err (n+L-1) den Fehler, der zeitlich am längsten zurückliegend erzeugt wurde und w ein Gewicht jedes Zeitintervalls; und
   einen Störungs-Detektor (214), der dazu eingerichtet ist, festzustellen, ob eine Störung zwischen den BSS's aufgetreten ist, basierend auf der anderer-BSSID Rate, die vom anderer-BSSID Raten-Berechner berechnet wurde.

2. Einrichtung gemäß Anspruch 1, in der weiter enthalten ist ein Speicherbereich (200), der dazu eingerichtet ist, die berechnete anderer-BSSID Rate zu speichern.

3. Einrichtung gemäß Anspruch 1 oder 2, worin der Störungs-Detektor (214) dazu eingerichtet ist, festzustellen, dass eine Störung aufgetreten ist, als Antwort wenn die anderer-BSSID Rate größer ist als ein vorbestimmter Schwellwert.

4. Einrichtung gemäß Anspruch 1, worin der BSSID einen Identifizierer (402) enthält, der einen BSS angezeigt, in dem eine beliebige Station gegenwärtig bedient wird.

5. Einrichtung gemäß Anspruch 4, worin der BSSID eine Medium Access Control MAC Adresse des AP enthält.

6. Einrichtung gemäß Anspruch 1, in der weiter enthalten sind ein Kanalschalter (215), der dazu eingerichtet ist, ein Signal zu empfangen, das das Auftreten einer Störung anzeigt und einen Kanal umzuschalten, der für die Übertragung und den Empfang von Datenübertragungsblöcken vorgesehen ist, als Antwort, wenn auf der Störungs-Detektor (214) feststellt, dass eine Störung aufgetreten ist und um ein Signal abzugeben, dass das Auftreten der Störung anzeigt.

7. Einrichtung gemäß Anspruch 1, worin der Störungs-Detektor (214) dazu eingerichtet ist, festzustellen, dass eine Störung aufgetreten ist, als Antwort wenn die anderer-BSSID Rate größer ist als ein erster vorbestimmter Schwellwert, wenn die Fehlerrate geringer ist, als ein vorbestimmter Schwellwert, und
   worin der Störungs-Detektor (214) dazu eingerichtet ist, festzustellen, dass eine Störung aufgetreten ist, als Antwort wenn die anderer-BSSID Rate größer ist als ein zweiter Schwellwert, der kleiner ist als der erste Schwellwert, wenn die Fehlerrate größer ist als der vorbestimmte Schwellwert.

8. Einrichtung gemäß Anspruch 1, in der weiter ein Speicherbereich (200) enthalten ist, der dazu eingerichtet ist, die berechnete Fehlerrate zu speichern.

9. Einrichtung gemäß Anspruch 1, in der weiter ein Datenübertragungsblock-Identifizierer (211) enthalten ist, der dazu eingerichtet ist, festzustellen, ob der empfangene Datenübertragungsblock ein Datenübertragungsblock ist, der eine Feststellung von Störungen erlaubt.

10. Einrichtung gemäß Anspruch 9, worin der Datenübertragungsblock- Identifizierer (211) dazu eingerichtet ist, festzustellen, dass ein Datenübertragungsblock, der den BSSID enthält, der Datenübertragungsblock ist, der das Feststellen von Störungen erlaubt.

11. Einrichtung gemäß Anspruch 10, worin der Datenübertragungsblock, der den BSSID enthält, mindestens einen Datenübertragungsblock für Verwaltung oder einen für Daten enthält.

12. Verfahren zum Feststellen von Störungen zwischen benachbarten Basis-Service-Sets BSS in einem drahtlosen lokalen Netzwerk WLAN System, das einem IEEE 802.11 Standard entspricht, in dem ein beliebiger Zugangspunkt AP drahtlos Datenübertragungsblöcke zu und von einer Station in einem relevanten BSS überträgt und empfängt, und in dem Kanalstörungen festgestellt werden, wobei das Verfahren durch die Schritte **gekennzeichnet** ist:

   Empfangen der Datenübertragungsblöcke;
   Berechnen (702) einer anderer-BSSID Rate für die empfangenen Datenübertragungsblöcke gemäß der folgenden Gleichung:

$$R_{OBSS} = w_o Num(n) + w_1 Num(n+1) + \ldots w_{L-1} Num(n+L-1)$$

   worin Num (n) die Anzahl der anderer-BSSID's darstellt, gemessen in jedem Zeitintervall, $R_{OBSS}$ die anderer-BSSID Rate und w ein Gewicht jedes Zeitintervalls;
   Berechnen (706) einer Fehlerrate, die beim Empfang des Datenübertragungsblocks verursacht ist, gemäß der folgenden Gleichung:

$$R_{ERR} = w_o Err(n) + w_1 Err(n+1) + \ldots w_{L-1} Err(n+L-1)$$

   worin Err(n) die Anzahl der Fehler darstellt, die während jedes Zeitintervalls gemessen werden, Err(n) den Fehler, der zeitlich am kürzesten zurückliegend erzeugt wurde, Err (n+L-1) den Fehler, der zeitlich am längsten zurückliegend erzeugt wurde und w ein Gewicht jedes Zeitintervalls; und
   Festzustellen (704), ob eine Störung aufgetreten ist, basierend auf der anderer-BSSID Rate.

13. Verfahren gemäß Anspruch 12, indem weiter enthalten ist,
   Schalten (712) eines zugeordneten Kanals für die Übertragung und den Empfang von Datenübertragungsblöcken als Antwort auf die Feststellung, dass Störungen aufgetreten sind.

**Revendications**

1. Appareil de détection d'interférences entre des ensembles de services de base, BSS pour « *Basic Service Set* », voisins (100, 110, 120) dans un réseau local sans fil dans lequel un point d'accès arbitraire (102, 112, 122) émet et reçoit par sans fil des trames à destination et en provenance d'une station (104-2) dans un ensemble BSS considéré et dans lequel des interférences de canal sont détectées, l'appareil étant **caractérisé en ce qu'**il comprend :

   un calculateur de taux d'autres identificateurs d'ensembles BSS (213), conçu pour calculer un rapport entre les trames contenant un identificateur (303) de l'ensemble BSS considéré et d'autres identificateurs d'ensembles BSS parmi toutes les trames reçues, dans lequel le calculateur de taux d'autres identificateurs d'ensembles BSS (213) est conçu pour calculer le taux d'autres identificateurs d'ensembles BSS à l'aide de l'équation suivante :

$$R_{OBSS} = w_0 Num(n) + w_1 Num(n+1) + ... + w_{L-1} Num(n+L-1),$$

où Num(n) est le nombre d'autres identificateurs d'ensembles BSS mesuré dans chaque intervalle de temps, $R_{OBSS}$ est le taux d'autres identificateurs d'ensembles BSS et w est une pondération de chaque intervalle de temps ;

un calculateur de taux d'erreurs (212) conçu pour mesurer un taux d'erreurs causées dans la réception de la trame, dans lequel le calculateur de taux d'erreurs est conçu pour calculer le taux d'erreurs à l'aide de l'équation suivante :

$$R_{ERR} = w_0 Err(n) + w_1 Err(n+1) + ... + w_{L-1} Err(n+L-1),$$

où Err(n) est le nombre d'erreurs mesuré dans chaque intervalle de temps, Err(n) est l'erreur créée le plus récemment, Err(n+L-1) est l'erreur la plus ancienne et w est une pondération de chaque intervalle de temps ; et
un détecteur d'interférences (214), conçu pour déterminer si des interférences se sont produites entre les ensembles BSS, sur la base du taux d'autres identificateurs d'ensembles BSS calculé par le calculateur de taux d'autres identificateurs d'ensembles BSS.

2. Appareil selon la revendication 1, comprenant en outre une zone de stockage (200) conçue pour stocker le taux d'autres identificateurs d'ensembles BSS calculé.

3. Appareil selon la revendication 1 ou 2, dans lequel le détecteur d'interférences (214) est conçu pour déterminer que des interférences se sont produites lorsque le taux d'autres identificateurs d'ensembles BSS dépasse une valeur de seuil prédéterminée.

4. Appareil selon la revendication 1, dans lequel l'identificateur d'ensemble BSS comprend un identificateur (402) indiquant un ensemble BSS dans lequel une station arbitraire est actuellement desservie.

5. Appareil selon la revendication 4, dans lequel l'identificateur d'ensemble BSS comprend une adresse de commande de l'accès au support, MAC pour « *Medium Access Control* », du point d'accès.

6. Appareil selon la revendication 1, comprenant en outre un commutateur de canal (215) conçu pour recevoir un signal indiquant l'occurrence d'interférences et pour commuter un canal attribué pour l'émission et la réception de trames en réponse à la détermination, par le détecteur d'interférences (214), que des interférences se sont produites et à la production du signal indiquant l'occurrence d'interférences.

7. Appareil selon la revendication 1,
dans lequel le détecteur d'interférences (214) est conçu pour déterminer que des interférences se sont produites en réponse au fait que le taux d'autres identificateurs d'ensembles BSS est supérieur à une première valeur de seuil, lorsque le taux d'erreurs est inférieur à une valeur de seuil prédéterminée ; et
dans lequel le détecteur d'interférences (214) est conçu pour déterminer que des interférences se sont produites en réponse au fait que le taux d'autres identificateurs d'ensembles BSS est supérieur à une seconde valeur de seuil qui est inférieure à la première valeur de seuil, lorsque le taux d'erreurs dépasse la valeur de seuil prédéterminée.

8. Appareil selon la revendication 1, comprenant en outre une zone de stockage (200) conçue pour stocker le taux d'erreurs calculé.

9. Appareil selon la revendication 1, comprenant en outre un identificateur de trames (211) conçu pour déterminer si la trame reçue est une trame autorisant la détection d'interférences.

10. Appareil selon la revendication 9, dans lequel l'identificateur de trames (211) est conçu pour déterminer qu'une trame contenant l'identificateur d'ensemble BSS est la trame autorisant la détection d'interférences.

11. Appareil selon la revendication 10, dans lequel la trame contenant l'identificateur d'ensemble BSS comprend au moins une trame parmi les trames de gestion et les trames de données.

**12.** Procédé de détection d'interférences entre des ensembles BSS dans un réseau local sans fil conforme à la norme IEEE 802.11, dans lequel un point d'accès arbitraire émet et reçoit par sans fil des trames à destination et en provenance d'une station dans un ensemble BSS considéré et dans lequel des interférences de canal sont détectées, le procédé étant **caractérisé par** les étapes consistant à :

recevoir les trames ;
calculer (702) un taux d'autres identificateurs d'ensembles BSS sur les trames reçues, à l'aide de l'équation suivante :

$$R_{OBSS} = w_0 Num(n) + w_1 Num(n+1) + \ldots + w_{L-1} Num(n+L-1),$$

où $Num(n)$ est le nombre d'autres identificateurs d'ensembles BSS mesuré dans chaque intervalle de temps, $R_{OBSS}$ est le taux d'autres identificateurs d'ensembles BSS et $w$ est une pondération de chaque intervalle de temps ;
calculer (706) un taux d'erreurs causées dans la réception de la trame, à l'aide de l'équation suivante :

$$R_{ERR} = w_0 Err(n) + w_1 Err(n+1) + \ldots + w_{L-1} Err(n+L-1),$$

où $Err(n)$ est le nombre d'erreurs mesuré dans chaque intervalle de temps, $Err(n)$ est l'erreur créée le plus récemment, $Err(n+L-1)$ est l'erreur la plus ancienne et $w$ est une pondération de chaque intervalle de temps ; et
déterminer (704) si des interférences se sont produites, sur la base du taux d'autres identificateurs d'ensembles BSS.

**13.** Procédé selon la revendication 12, comprenant en outre l'étape consistant à commuter (712) un canal attribué pour l'émission et la réception de trames en réponse à la détermination que des interférences se sont produites.

# FIG. 1

# FIG. 2

200 — STORAGE

210

211 — FRAME IDENTIFIER

212 — ERROR RATE CALCULATOR

213 — OTHER-BSSID RATE CALCULATOR

214 — INTERFERENCE DETECTOR

215 — CHANNEL SWITCH

Conventional WLAN protocol

220 — PHY

EP 1 643 686 B1

FIG. 3

| Octets:2 | 2 | 6 | 6 | 6 | 2 | 6 | 0.2312 | 4 |
|---|---|---|---|---|---|---|---|---|
| Frame Control (301) | Duration ID (302) | Address1 (303) | Address2 (304) | Address3 (305) | Sequence Control (306) | Address4 (307) | Frame Body (310) | FCS (320) |

MAC Header(300)

FIG. 4

| B0 | B1B2 | B3B4 | | B7 B8 | B9 | B10 | B11 | B12 | B13 | B14 | B15 |
|---|---|---|---|---|---|---|---|---|---|---|---|
| Protocol Version (400) | Type (402) | Subtype (404) | | To DS (406) | From DS (408) | More Frag (410) | Retry (412) | Pwr Mgt (414) | More Data (416) | WEP (418) | Order (420) |

| Bits:2 | 2 | 4 | 1 | 1 | 1 | 1 | 1 | 1 | 1 | 1 |

17

## FIG. 5

| To DS | From DS | Address 1 | Address 2 | Address 3 | Address 4 |
|---|---|---|---|---|---|
| 0 | 0 | DA | SA | BSSID | N/A |
| 0 | 1 | DA | BSSID | SA | N/A |
| 1 | 0 | BSSID | SA | DA | N/A |
| 1 | 1 | RA | TA | DA | SA |

# FIG. 6

```
                    ( START )
                        │
                        ▼
          ┌──────────────────────┐
          │  RECEIVE MAC FRAME   │──600
          └──────────────────────┘
                        │
                        ▼
                      602
                   ╱  IS IT  ╲
         NO   ╱ MANAGEMENT FRAME ╲
      ◄──────╲  OR DATA FRAME?  ╱
                   ╲        ╱
                        │
                       YES
                        ▼
                      604
                   ╱  IS IT  ╲
         NO    ╱ FRAME HAVING ╲
      ◄───────╲   NO ERROR?  ╱
                   ╲       ╱
                        │
                       YES
                        ▼
                      606
                  ╱ DOES OTHER ╲
         NO    ╱  BSSID EXIST? ╲
      ◄───────╲              ╱
                   ╲       ╱
                        │
                       YES
                        ▼
          ┌──────────────────────┐
          │     CALCULATE        │──608
          │  OTHER-BSSID RATE    │
          └──────────────────────┘
                        │
                        ▼
                      610
                ╱ OTHER-BSSID RATE > ╲
       NO    ╱   THRESHOLD VALUE?   ╲
     ◄──────╲                      ╱
                ╲                ╱
                        │
                       YES
                        ▼
          ┌──────────────────────┐
          │    SWITCH CHANNEL    │──612
          └──────────────────────┘
                        │
                        ▼
                    (  END  )
```

# FIG. 7

```
                  ┌─────────────────────────┐
                  │ STORE INFORMATION (RAM) │──700
                  └─────────────────────────┘
                               │
                               ▼
                  ┌─────────────────────────┐
                  │       CALCULATE         │──702
                  │   OTHER-BSSID RATE      │
                  └─────────────────────────┘
                               │
                               ▼        704
            YES         ◇─────────────────◇
      ◄───────────────  │ R_OBSS = R_OBSS_THR ? │
      │                 ◇─────────────────◇
      │                          │ NO
      │                          ▼        706
      │           YES     ◇─────────────────◇
      ◄───────────────    │ R_ERR = R_ERR_THR ? │
      │                   ◇─────────────────◇
      │                          │ NO
      │                          ▼        708
      │           YES     ◇─────────────────◇
      ◄───────────────    │ RSSI_OBSS = RSSI_THR ? │
      │                   ◇─────────────────◇
      │                          │ NO
      ▼                          ▼
┌──────────────────┐      ┌──────────────────┐
│    DETERMINE     │──712 │   RECEIVE NEW    │──710
│ CHANNEL SWITCHING│      │   MAC FRAME      │
└──────────────────┘      └──────────────────┘
```

# FIG. 8

| Time | ERROR | Other BSSID | Weight |
|---|---|---|---|
| $T[n] \leq t < T[n+1]$ | Err[n] | Num[n] | $w_0$ |
| $T[n+1] \leq t < T[n+2]$ | Err[n+1] | Num[n+1] | $w_1$ |
| $T[n+2] \leq t < T[n+3]$ | Err[n+2] | Num[n+2] | $w_2$ |
| $\vdots$ | | | |
| $T[n+L-1] \leq t < T[n+L]$ | Err[n+L-1] | Num[n+L-1] | $w_{L-1}$ |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2003040319 A